Europäisches Patentamt

(19) European Patent Office

Office européen des brevets

(11) Publication number: **0 014 522**

A1

(12) # EUROPEAN PATENT APPLICATION

(21) Application number: **80300097.5**

(22) Date of filing: **10.01.80**

(51) Int. Cl.³: **B 32 B 15/00**

(30) Priority: **26.01.79 GB 7902930**

(43) Date of publication of application:
**20.08.80 Bulletin 80/17**

(84) Designated Contracting States:
**DE FR GB IT**

(71) Applicant: IMPERIAL CHEMICAL INDUSTRIES LIMITED
Imperial Chemical House Millbank
London SW1P 3JF(GB)

(72) Inventor: Allen, William John George
96 Clifford Road
New Barnet Hertfordshire(GB)

(72) Inventor: Brewster, Ian
56 Rotchell Road
Dumfries Dumfriesshire(GB)

(74) Representative: Cooper, Alan Victor et al,
Imperial Chemical Industries Limited Legal Department:
Patents Thames House North Millbank
London SW1P 4QG(GB)

(54) Formable fibre-reinforced metal laminates and methods for making them.

㊼ Laminates of metal foil (1) (e.g. stainless steel) and long (at least 20 mm) silicate fibre (3) containing metal ions (e.g. glass fibres) are made by bonding the foil to the fibres using a layer (2) of a copolymer of an $\alpha$-olefin and a carboxylic acid (preferably a graft copolymer of polypropylene and acrylic, methacrylic or maleic acid or anhydride). Optionally, the laminates contain a layer 10 of polyolefin. Preferably, the fibre becomes embedded in the copolymer and/or polyolefin during lamination. The use of long fibres produces greater impact strengths.

FIG 1

EP 0 014 522 A1

FORMABLE FIBRE-REINFORCED METAL LAMINATES
AND METHODS FOR MAKING THEM

This invention relates to formable fibre-reinforced metal laminates bonded using acid modified polyolefins and to methods for making them.

At least since 1973, the need to conserve energy has stimulated attempts to reduce the weight of metal components of vehicles, especially motor cars and in theory lighter components could be made from metal laminates. British patent specification 1 367 662 (published in 1974) suggested the possibility of making motor vehicle components from laminates of stainless steel foil and acid modified polypropylene comprising graft copolymerised acrylic acid. The acid modified polypropylene was optionally reinforced by glass or asbestos fibre and although 1 367 662 does not specify the length of fibre to be used, the fibres traditionally used in commercial reinforced polyolefins are short (i.e. up to 6 mm or 0.25 inches long) as indicated by Steinkamp et al (SPE Journal June 1973 pages 34 to 37) where glass fibres 0.25 inches long are used to reinforce polyolefins which have been modified with acid to improve their affinity for the fibres. A similar disclosure occurs in West German patent specification 2 028 014 (published in 1972) except that 2 028 014 prefers copolymers of ethylene and acrylic acid and states expressly that the glass fibres are 2 to 20 mm long.

Metal laminates comprising acid modified polyolefins reinforced by short glass fibres have only a poor impact resistance and they have not found significant use in the construction of vehicles. Their poor impact resistance is not surprising because thin section glass-reinforced polypropylene mouldings of large area are known to have poorer impact resistances than corresponding unreinforced mouldings (see "'Propathene' PP134" second edition pages 6 and 7 published by Imperial Chemical Industries Limited in 1977).

In 1971, the motor vehicle industry was offered a more impact resistant commercially formable sheet comprising polypropylene reinforced by continuous glass fibre. Such sheet is described by Fazzari et al in SPE Journal September 1972 Volume 28 pages 38 to 42, the contents of which are herein incorporated by reference. Fazzari et al do not disclose that the sheet remains formable when laminated to metal foil. Instead they disclose the application of metal surfaces after the sheet has been formed.

This invention provides a formable fibre-reinforced metal laminate comprising a metal foil 0.01 to 1 (preferably 0.05 to 0.4) mm thick bonded to a matrix of silicate fibre containing metal ions by means of acid modified crystalline poly-$\alpha$-olefin containing from 0.5 to 15 (preferably 2 to 8)% by weight of the modified polyolefin of carboxylate (COO) groups provided by copolymerised (preferably graft copolymerised) monomer characterised in that the matrix comprises fibre having a minimum length of over 20 mm. The invention also provides a method of making the laminate which comprises contacting one surface of a layer of acid modified polyolefin in which the carboxylate groups form part of acid, acid anhydride and/or acid salt groups with a surface of the metal foil and also contacting the acid modified polyolefin with the matrix of fibre under conditions of temperature and pressure sufficient to bond the foil to the acid modified polyolefin and the acid modified polyolefin to the matrix. The combined effects of the laminated metal foil and the long fibre produces an impact strength far greater than the impact strengths obtained using laminated metal foil or long fibres separately. Also the tangent moduli of the laminates are less anisotropic. The use of acid modified polyolefin enables the laminates to be formed by pressing and so avoids the need for a separate application of a metal surface after forming.

The laminate may also comprise one or more optional additional layers of thermoplastics material (usually a crystalline poly-α-olefin) bonded to the metal foil by means of acid modified polyolefin. The preferred thermoplastics material is a crystalline homopolymer of propylene having a melt flow index of from 0.1 to 40 (preferably 0.5 to 10) g/10 minutes measured using a 2.16 kg load at 230°C. (Melt flow index is measured by the procedure of Method 105C of Part 1 of British Standard 2782 of 1970 but using the loads and temperatures herein specified). The homopolymer may be blended with up to 40% (by weight of the blend) of a rubbery material which improves the impact strength of the homopolymer. Typical of such rubbery materials are butyl rubbers, polyisobutylenes and amorphous copolymers of ethylene and propylene (especially when diene modified) as described in "Chemistry and Industry" 16 March 1974 pages 255 to 258, the contents of which are herein incorporated by reference. A preferred blend with ethylene/propylene copolymer is made by adding ethylene to the closing stages of an otherwise homopolymerisation of propylene so as to produce a material comprising predominantly propylene homopolymer and from 4 to 25% (by weight of the blend) of copolymerised ethylene present mainly as blocks of ethylene/propylene copolymer some of which may terminate chains of propylene homopolymer.

The matrix may simply comprise an arrangement (preferably a mat or woven cloth) of fibre but preferably comprises fibre embedded in acid modified polyolefin and/or in thermoplastics material of an optional layer of the laminate. The fibre may be embedded prior to lamination, for example, by melt coating acid modified polyolefin onto an arrangement of fibre or by dispersing fibre into thermoplastics material to make a reinforced product of the type described by Fazzari et al. Alternatively, the fibre may become embedded during lamination by choosing conditions of temperature and pressure which allow the acid modified polyolefin to penetrate into the arrangement of fibre and/or allow the arrangement of fibre to sink into a heat-softened optional layer of thermoplastics material.

·Useful silicate fibre containing metal ions includes asbestos and glass fibre. Glass fibre is described by Loewenstein (i.e. the book "The Manufacturing Technology of Continuous Glass Fibres" by K L Loewenstein and published in 1973 by Elsevier of Amsterdam) the contents of which are herein incorporated by reference. Suitable glass fibre includes the rovings, yarns and continuous strands described in Chapter III of Loewenstein. By "continuous strand" is meant a strand over 50 mm long and having a maximum length determined mainly by convenience of handling. A preferred mat may comprise as few as 1 to 10 continuous fibres. Preferably, at least 50% (more preferably at least 90%) by weight of the fibre in the matrix is provided by one or more fibres having a maximum length of at least 50 mm. Generally, fibres shorter than 20 mm are only present as a result of unintentional breakages. Preferably, the fibres are sized by keying agents, especially silane keying agents of the kind described by Chapter VI of Loewenstein, for example, γ-methacryloxypropyltrimethoxysilane, γ-aminopropyltrimethoxysilane or γ-thiopropyltrimethoxysilane.

Prior to lamination, the acid modified crystalline poly-α-olefin comprises carboxylate groups which form part of acid, acid anhydride and/or acid salt groups. Presumably, during lamination, a chemical bond is established between the metal foil and at least some of the carboxylate groups but it could be that bonding comprises a keying of the acid modified polyolefin into irregularities in the surface of the metal foil. Likewise it is not certain how the acid modified polyolefin bonds to the matrix and bonding may be assisted by deep penetration of the acid modified polyolefin into the matrix. The acid modified polyolefin is conveniently made by copolymerising ethylene with comonomers such as acrylic or methacrylic acids or maleic anhydride or by grafting such comonomers onto a crystalline poly-α-olefin, preferably onto a homopolymer of propylene (or its blend with a rubbery material) of the kind preferred for use as the optional layer of the laminate. The melt flow index of the crystalline poly-α-olefin prior to grafting is most preferably in the range 0.1 to 300 (especially 35 to 100) g/10 minutes (10 kg load at 190°C). Preferably, prior to lamination, the acid modified polyolefin comprises 4 to 8% (by weight of the copolymer) of graft copolymerised acrylic acid, i.e. about 2.5 to 5% by weight of carboxylate groups.

The metal foil is, for example, stainless steel, aluminium or mild steel foil and may be roughened on the surface to be bonded to the acid modified polyolefin. Stainless steel is preferred for good impact resistance, aluminium for ease of forming and mild steel for cheapness.

The laminate may comprise a single metal foil bonded by acid modified polyolefin to a matrix of fibre, preferably a matrix of fibre embedded in a layer of thermoplastics material. Alternatively, the laminate may comprise two or more opposed metal foils with one or more matrices sandwiched between them. Preferably, the thickness of the laminate is from 1 to 10 (especially 3 to 5) mm and in general it will be made in widths of at least 10 cm. The fibre is preferably used in weights of from 20 to 1000 (especially 25 to 400) $g/m^2$ and the thicknesses of layers of acid modified polyolefins or of optional layers of thermoplastics materials are determined by the thickness required for the laminate.

The laminates may be made by assembling a sandwich of metal foil, acid modified polyolefin, fibre and optionally a sheet of thermoplastics material in a press and simultaneously subjecting all the components of the sandwich to sufficient heat·and pressure to bond the components together into a laminate. If the sandwich comprises a mat or cloth of fibre laid on top of a sheet of thermoplastics material, the pressure exerted by the press can be chosen so as to cause at least some of the mat or cloth to sink into the heat-softened thermoplastics material. The acid modified polyolefin may be bonded to the metal foil or matrix prior to their introduction into the press so that lamination is partially achieved prior to pressing. To make lamination continuous, the press may be replaced by one or more pairs of opposed heated rollers or by opposed heated bands carried on rollers and optionally housed in an oven.

The acid modified polyolefin may be provided in the form of a film or it may be provided as a powder which is sprinkled over the matrix or metal foil prior to lamination.

The laminates of this invention may be formed especially pressed into a wide variety of articles hitherto made from sheet steel, especially bumpers and body panels for vehicles.

The invention is illustrated by the following examples of which Examples A to H are comparative. In the Examples, impact resistance was measured as follows. A cylindrical dart 12 mm in diameter having its leading end rounded into a hemisphere was let fall into the centre of a horizontally mounted steel ring of internal diameter 50 mm.  A sample 7.6 cm square of the laminate to be tested was laid (unclamped) over the ring so that the dart passed through the centre of the sample.  The dart was caused to hit the laminate at a speed of 3 m/sec to ensure that (except in Example 4) its energy on impact was always greatly in excess of that needed to penetrate the laminate.  The impact resistance of the laminate was measured using a "Kistler" quartz force transducer system to detect the forces generated during impact.  The transducer was used to obtain a force-deflection curve and an integral plot of energy changes in each test.

### EXAMPLES 1 AND 2

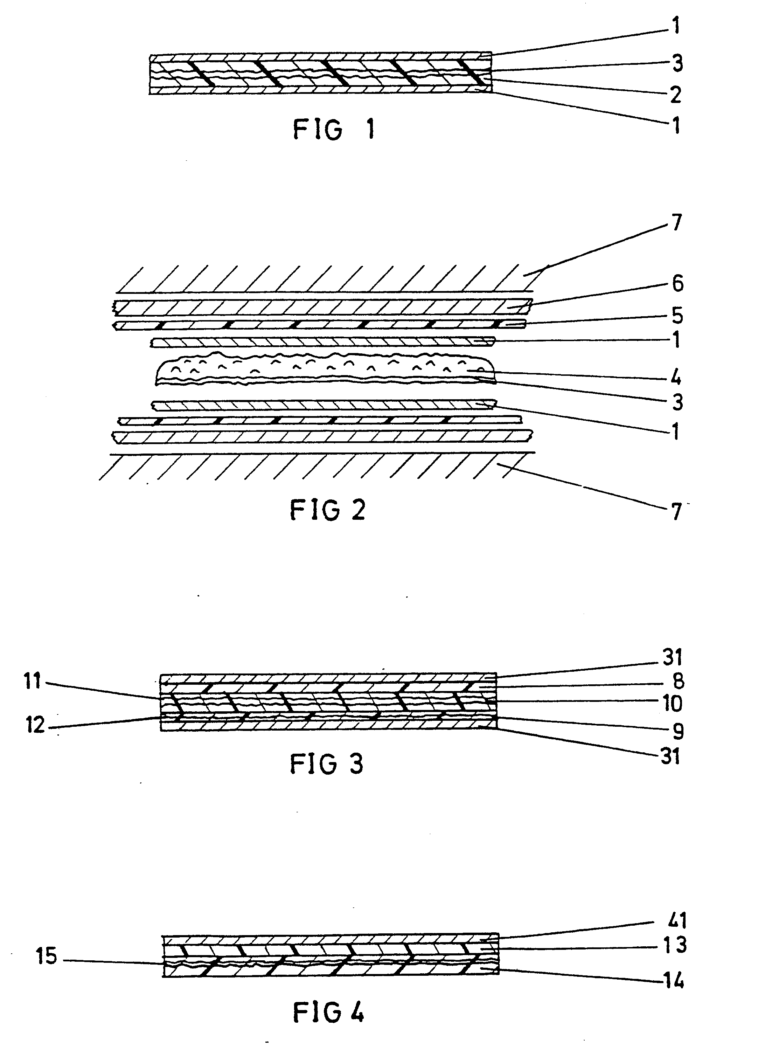

Laminates as shown in Figure 1 of the drawings were made using opposed metal foils and glass fibre mat as specified in Table 1 and using a graft copolymer of polypropylene and 6% (by weight of the copolymer) of acrylic acid, i.e. 3.67% of carboxylate groups.

To make the laminates, the mat was covered with sufficient powdered graft copolymer to produce a laminate 3 mm thick.  The covered mat was sandwiched between the opposed metal foils and (as shown in Figure 2 of the drawings) the sandwich was located between opposed polyester films and opposed steel glazing plates which in turn were received between the platens of a press.  The platens had been pre-heated to 220°C and were closed onto the glazing plates under a pressure of 160 $kN/m^2$.  The platens were maintained at 220°C and heat from them caused the graft copolymer to melt.  The pressure of 160 $kN/m^2$ was maintained for 5 minutes and then increased to 950 $kN/m^2$ for six minutes to cause the molten graft copolymer to penetrate the mat and to ensure the copolymer intimately contacted the opposed surfaces of the metal foils.  The polyester films prevented excess graft copolymer sticking to the glazing plates and the glazing plates gave a more even distribution of pressure from the platens. The sandwich was then removed from the hot press and placed between the platens of a cold press, these platens being at room temperature. The platens were closed onto the sandwich under a pressure of 470 $kN/m^2$ and the sandwich was cooled to room temperature whereupon the graft copolymer solidified converting the sandwich to a laminate and embedding the mat of glass fibre.

Samples 4.6 cm square were cut from the cooled laminate and presented for impact testing at room temperature. The impact resistances obtained are shown in Table 1.

## COMPARATIVE EXAMPLES A AND C

Impact tests were carried out on sheets 3 mm thick of unreinforced crystalline propylene homopolymer of melt flow index 1.5 g/10 minutes (2.16 kg 230°C) and on the same homopolymer reinforced with continuous glass fibre as specified in Table 1. The impact resistances obtained are also shown in Table 1.

## COMPARATIVE EXAMPLES B TO E, G AND H

Laminates were made as in Examples 1 and 2 except that the materials used were varied as specified in Table 1. The impact resistances obtained are set out in Table 1.

## COMPARATIVE EXAMPLE F

For comparison, in Example F the glass-fibre reinforcement was replaced by 19% by weight of a particulate talc.

The examples show that the use of continuous glass fibre greatly increases the impact resistance of the laminates.

Table 1 also quotes tangent moduli for the laminates measured in the direction giving the greatest tangent modulus (Direction a) and in a direction (Direction b) which is perpendicular to Direction a. It will be seen that the presence of continuous glass fibre reduces the anisotropy of the tangent moduli.

TABLE 1

| Example | Metal foil | | Glass fibre | | | Impact resistance NM | Tangent modulus GN/m$^2$ | |
| | Metal | Thickness mm | Weight of mat. kg/m$^2$ | % weight of fibre based on composition and fibre | Length of fibre mm | | Direction a | Direction b |
|---|---|---|---|---|---|---|---|---|
| A | none | – | none | – | – | 0.7 | – | – |
| B | stainless steel | 0.1 | none | – | – | 6.3 | 11.2 | 7.4 |
| C | none | – | 1.2 | 31 | **continuous | 9.3 | – | – |
| D | stainless steel | 0.1 | 1.2 | 31 | 3 | 7.8 | – | – |
| E | stainless steel | 0.1 | 1.2 | 31 | 6 | 7.9 | – | – |
| 1 | stainless steel | 0.1 | 1.2 | 31 | **continuous | 25.9 | 29.9 | 28.5 |
| 2 | stainless steel | 0.1 | 1.8 | 40 | **continuous | 35.6 | 25.1 | 25.1 |
| F | stainless steel | 0.1 | – | *19% talc | particulate | 4.7 | – | – |
| G | aluminium | 0.125 | none | – | – | 0.5 | – | – |
| H | mild steel | 0.1 | none | – | – | 1.5 | – | – |

\* % by weight based on the weight of graft copolymer in the composition.
\*\* length well in excess of 50 mm.

## EXAMPLE 3

A laminate was made by the procedure of Examples 1 and 2 except that the weight of the mat, the proportion of fibre in the matrix and the thickness of the laminate were as specified in Table 2 and instead of the covering of powdered graft copolymer, a film of the same graft copolymer was used. The impact resistance of the laminate was measured and is given in Table 2.

## EXAMPLE 4

Using the procedure of Example 3, a laminate was made from a sandwich consisting of a central sheet of polypropylene sandwiched between opposed glass fibre mats which were in turn sandwiched between opposed films of graft copolymer which were in turn sandwiched between the opposed metal foils. The central sheet was 6 mm thick and its polypropylene was a homopolymer of melt flow index 1.5 g/10 minutes (2.16 kg 230°C).

During lamination, the heat and pressure from the press were sufficient to soften the central sheet and cause the upper glass fibre mat to sink into the central sheet where it became embedded on cooling to produce the laminate shown in Figure 3 of the drawings. The impact resistance of the laminate was measured and is given in Table 2.

## EXAMPLE 5

Using the procedure of Example 3, a laminate was made from a sandwich consisting of chopped glass-fibre mat covered with a film of the graft copolymer and sandwiched between an upper metal foil and a lower sheet 4 mm thick of polypropylene (melt flow index 1.5 g/10 minutes 2.16 kg 230°C). Again during lamination heat and pressure from the press was sufficient to cause the mat to sink into the sheet of polypropylene where it became embedded on cooling to produce the laminate shown in Figure 4 of the drawings.

The impact resistance of the laminate was measured and is given in Table 2.

TABLE 2

| Ex. | Glass fibre | | | Thickness of laminate mm | Impact resistance NM |
|-----|-------------|---|---|---------|---------|
|     | Weight of mat kg/m$^2$ | % weight of fibre based on composition and fibre | Length of fibre | | |
| 3 | 3.2 | 32.6 | continuous | 5 | 54 |
| 4 | 5.8 | 34.1 | continuous | 7 | did not break |
| 5 | 3.1 | 30.3 | between 20-50 mm | 5 | 86 |

Laminates made according to Examples 1 to 5, a sandwich of the type used in Example 2 and apparatus for a continuous method for making laminates will now be described with reference to the drawings which are all diagrammatic and of which:

Figure 1 is a section of a laminate according to any one of Examples 1, 2 or 3;

Figure 2 is an exploded section of a sandwich as used in Example 2;

Figure 3 is a section of a laminate according to Example 4;

Figure 4 is a section of a laminate according to Example 5; and

Figure 5 is schematic representation of apparatus for a continuous process for making laminates.

Figure 1 shows a laminate of two opposed metal foils 1 bonded by means acid modified crystalline poly-α-olefin to a matrix 2 consisting of a layer of the acid modified crystalline poly-α-olefin reinforced with embedded mat 3 of continuous glass fibres.

Figure 2 shows a sandwich for use in making the laminate shown in Figure 1. The sandwich consists of mat 3 of continuous glass fibre covered with deposit 4 of powdered acid modified polyolefin, mat 3 and deposit 4 being sandwiched between opposed metal foils 1. The sandwich is located between sheets 5 of polyester film which in turn are between steel glazing plates 6 and platens 7 of a press which is not shown.

Figure 3 shows a laminate consisting of opposed metal foils 31 bonded by means of upper and lower layers 8 and 9 of acid modified polyolefin to central layer 10 of thermoplastics material. Central layer 10 and lower layer 9 are reinforced by embedded mats 11 and 12 of continuous glass fibre and together provide the matrix of the laminate.

Figure 4 shows a laminate consisting of metal foil 41 bonded by a layer 13 of acid modified polyolefin to a matrix 14 consisting of a layer of thermoplastics material reinforced by embedded mat 15 of chopped glass fibre.

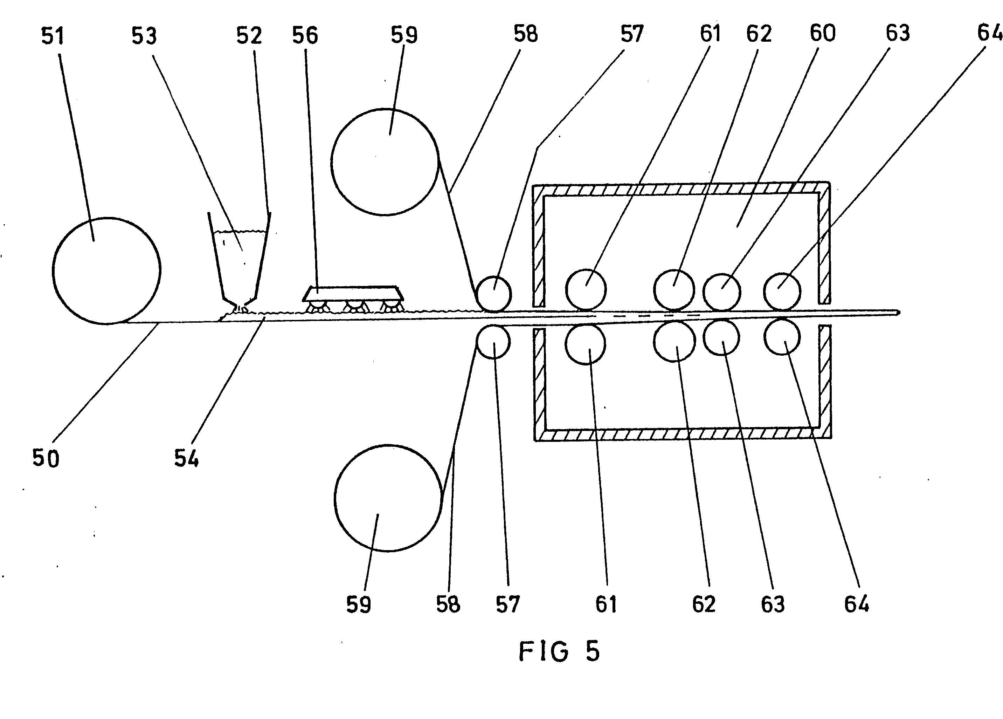

Figure 5 shows apparatus for the continuous manufacture of laminates. In Figure 5 a mat 50 of glass fibre is paid out from a supply roll 51 and passed under a vibrating hopper 52 which sprinkles granules of acid modified polyolefin 53 onto mat 50 to form a deposit 54. Mat 50 covered by deposit 54 is passed under infra-red heater 56 where exposed granules of powder fuse and coalesce and so reduce the tendency for the powder to be blown about by strong air currents in oven 60. The mat 50 and deposit 54 are then passed between idler rollers 57 and sandwiched between metal foils 58 paid out from supply

30609

rolls 59. The sandwich is passed into hot air oven 60 where the acid modified polyolefin melts. The sandwich is compressed by opposed pairs of rollers 61 to 64 and the molten acid modified polyolefin penetrates mat 50 and makes intimate contact with opposed surfaces of metal foils 58. The sandwich is passed out of oven 60 and cooled to produce a laminate having a transverse section as shown in Figure 1.

- 14 -                    30609

CLAIMS

1. A formable fibre-reinforced metal laminate comprising a metal foil 0.01 to 1 mm thick bonded to a matrix of silicate fibre containing metal ions by means of acid modified crystalline poly-$\alpha$-olefin containing from 0.5 to 15% by weight of the modified polyolefin of carboxylate groups provided by copolymerised monomer characterised in that the matrix comprises fibre having a minimum length of over 20 mm.

2. A laminate as claimed in claim 1 which comprises an additional layer of thermoplastics material, the additional layer being bonded to the acid modified polyolefin.

3. A laminate according to claim 2 wherein at least some of the fibre is present in the additional layer.

4. A laminate according to any one of the preceding claims comprising at least two opposed metal foils with one or more matrices sandwiched between them.

5. A method for making the laminate of claim 1 wherein the method comprises contacting one surface of a layer of acid modified polyolefin in which the carboxylate groups form part of acid, acid anhydride and/or acid salt groups with a surface of the metal foil and also contacting the acid modified polyolefin with the matrix of fibre under conditions of temperature and pressure sufficient to bond the foil to the acid modified polyolefin and the acid modified polyolefin to the matrix.

0014522

FIG 1

FIG 2

FIG 3

FIG 4

FIG 5

0014522

Application number

EP 80 30 0097

## European Patent Office

## EUROPEAN SEARCH REPORT

| DOCUMENTS CONSIDERED TO BE RELEVANT | | | CLASSIFICATION OF THE APPLICATION (Int. Cl. |
|---|---|---|---|
| Category | Citation of document with indication, where appropriate, of relevant passages | Relevant to claim | |
| D | GB - A - 1 367 662 (ICI) <br> * Page 1, lines 47-88; page 2, lines 1-44; page 3, example 1 * <br><br> -- | 5 | B 32 B 15/00 |
| D | DE - A - 2 028 014 (B.A.S.F.) <br> * Page 2, lines 5-36; pages 3,4; page 5, lines 1-34; pages 6,7; example; figure * <br><br> -- | 5 | |
| | GB - A - 1 .001 734 (NATIONAL LEAD COMP.) <br> * Page 1, lines 11-20 and 63-73; page 2, lines 17-129; page 3, lines 1-89; pages 5,6, example 1; figures 1,2 * <br><br> -- | 5 | **TECHNICAL FIELDS SEARCHED (Int Cl** <br><br> B 32 B |
| A | GB - A - 1 341 500 (SWISS ALU-MINIUM LTD.) | | |
| A | GB - A - 1 309 318 (UNIVERSAL OIL PRODUCTS) | | |
| A | GB - A - 1 267 569 (GULF) <br><br><br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

& member of the same patent family, corresponding document

The present search report has been drawn up for all claims

| Place of search | Date of completion of the search | Examiner |
|---|---|---|
| The Hague | 12-05-1980 | VAN THIELEN |

EPO Form 1503.1 06.78